# DEMANDE DE BREVET EUROPEEN

(11) **EP 1 465 299 A1**
(43) Date de publication de la demande: **06.10.2004**
(21) Numéro de dépôt: 04356045.7
(22) Date de dépôt: 02.04.2004
(51) Int. Cl.: H01R 25/00, B60R 16/02

(54) **Circuit électrique de remorque de véhicule lourd et dispositif de raccordement**

(30) Priorité: 03.04.2003 FR 0304171
(71) Demandeur: Vignal Systems, 69200 Venissieux (FR)
(72) Inventeur: Tramzal, Philippe, 69008 Lyon (FR); Lecocq, Christophe, 69100 Villeurbanne (FR)
(74) Mandataire: Maureau, Philippe

(57) **Abrégé**

Circuit électrique de remorque de véhicule lourd comportant, à l'avant de la remorque, au moins une prise (3a, 3b) fixée à la remorque pour l'établissement d'une liaison électrique avec le véhicule tracteur, un premier moyen de jonction entre au moins un câble (4a, 4b) venant de la prise et un prolongateur multiconducteur (11) s'étendant vers l'arrière de la remorque, et un deuxième moyen de jonction prévu à l'arrière de la remorque entre le prolongateur et plusieurs dérivations vers différents feux ou organes électriques. Le prolongateur (11) est muni, à au moins l'une de ses extrémités, d'une première partie de connecteur (12a, 13a) comportant un moyen de verrouillage mécanique avec une deuxième partie de connecteur (12b, 13b) prévue sur un ou plusieurs câbles à raccorder et comportant un moyen de verrouillage mécanique conjugué, et un surmoulage (18a, 19a) est prévu autour de l'entrée pour câble de la partie de connecteur et du ou des câbles, pour l'étanchéité et la tenue mécanique.

## Description

L'invention est relative à un circuit électrique de remorque de véhicule lourd, du genre de ceux qui comportent, à l'avant de la remorque, au moins une prise fixée à la remorque pour l'établissement d'une liaison électrique avec le véhicule tracteur, un premier moyen de jonction entre au moins un câble venant de la prise et un prolongateur multiconducteur s'étendant vers l'arrière de la remorque, et un deuxième moyen de jonction prévu à l'arrière de la remorque entre le prolongateur multiconducteur et plusieurs dérivations vers différents feux ou organes électriques.

Le terme « remorque» utilisé dans la description et dans les revendications englobe de manière générale les remorques proprement dites , ainsi que les semi-remorques.

Les fonctions de signalisation réglementaires sur une remorque de véhicule lourd sont nombreuses et comprennent:
- les feux arrière regroupant: indicateur de direction, stop, brouillard, recul, encombrement inférieur, position;
- les feux d'encombrement arrière supérieurs;
- les feux de position latéraux;
- les feux d'encombrement avant inférieurs (sur la face avant);
- les feux d'encombrement avant supérieurs (sur la face avant).

Avec l'évolution des réglementations, le nombre de ces fonctions de signalisation a tendance à augmenter.

Actuellement, ces fonctions de signalisation sont regroupées, dans leur ensemble, en huit informations électriques, y compris la masse, provenant du véhicule tracteur.

Pour acheminer ces informations du tracteur vers les différents organes de la remorque assurant la signalisation, une liaison électrique est effectuée entre le tracteur et la remorque à l'aide d'au moins une prise électrique fixée à l'avant de la remorque pour coopérer avec une fiche conjuguée prévue à une extrémité d'un câble venant du tracteur.

La liaison peut être assurée par exemple par deux prises sept voies appelées 24 N (conforme à la norme ISO 1185) et 24 S (conforme à la norme ISO 3731), ou par une seule prise quinze voies (conforme à la norme ISO 12098).

Des câbles acheminent les signaux de courant correspondant aux informations, et la puissance électrique servant aux feux de signalisation et aux différentes fonctions.

Le circuit électrique d'une remorque poids lourd peut être décomposé en trois parties
- une partie avant composée de la ou des prises, de faisceaux de câbles issus de ces prises et de feux de position avant;
- une partie centrale comprenant un premier moyen de jonction situé vers l'avant de la remorque et relié aux câbles venant de la ou des prises, un prolongateur et un deuxième moyen de jonction situé vers l'arrière de la remorque et relié par le prolongateur au premier moyen de jonction;
- une partie arrière composée de faisceaux de câbles permettant l'alimentation des feux arrière, du feu de plaque d'immatriculation, des feux de gabarit et d'encombrement, reliés au deuxième moyen de jonction arrière.

Le premier et le deuxième moyen de jonction doivent permettre de réaliser un raccordement électrique entre plusieurs faisceaux de câbles.

Par la suite, on appellera « raccordement » la liaison entre deux faisceaux (un faisceau d'entrée et un faisceau de sortie) et « dérivation» la liaison entre d'un côté un faisceau et de l'autre côté plusieurs faisceaux.

L'environnement physico-chimique pour les moyens de jonction est contraignant car les remorques ne sont pas carrossées, de sorte que les moyens de jonction ne bénéficient pas d'une protection, d'un capotage ou autre équipement. Tout composant installé sur ou sous la remorque doit répondre à des niveaux de protection relativement sévères déterminés par plusieurs normes.

Dans l'état actuel de la technique, les moyens de jonction sur remorque de véhicule lourd sont formés par des modules de jonction comprenant un boîtier fixé sous la remorque et permettant de réaliser le raccordement électrique entre les différents faisceaux de câbles.

Cet état de la technique présente plusieurs inconvénients.

Tout d'abord le volume du boîtier du module de jonction est important et ne permet pas de satisfaire les attentes et les besoins de tous les constructeurs de remorque.

Le mode de fixation du boîtier par vis oblige les constructeurs à prévoir une plate-forme support sur la remorque. En outre le temps de montage n'est pas négligeable et nécessite des outils, voire des outillages.

Les raccordements électriques intérieurs au module exigent aussi un temps de montage relativement important. Des problèmes existent au niveau de la fiabilité du montage électrique car le constructeur doit connecter un par un tous les faisceaux d'alimentation des différents organes électriques ce qui peut générer des erreurs de montage. Cette tâche de montage des modules de jonction doit en outre être confiée à des personnes ayant les compétences requises pour effectuer des connexions électriques. Le module doit être refermé lorsque les connexions sont réalisées ce qui prend un temps supplémentaire. La douille utilisée sur le module permet une étanchéité correcte module / douille et douille / câble. Néanmoins elle ne permet pas de tenir les spécifications en terme de tenue à la traction. Une perte d'étanchéité peut avoir lieu si la traction est trop forte sur le câble.

On connaît d'après US-A-4 842 524 un dispositif de raccordement électrique entre un véhicule léger et sa remorque. Le dispositif comprend un faisceau de câbles muni à chacune de ses extrémités de connecteurs de forme parallélépipédique rectangle. L'assemblage du connecteur se fait par simple enfichage de parties correspondantes. Aucune mesure particulière n'est prévue pour assurer une étanchéité notamment à l'égard de jets d'eau de lavage haute pression. Un tel dispositif ne peut satisfaire aux exigences d'étanchéité, de tenue mécanique et de tenue à la température imposée aux équipements de poids lourds.

L'invention a pour but, surtout, de fournir un circuit électrique de remorque de véhicule lourd qui permet d'éviter les modules de jonction tout en assurant au mieux les fonctions d'étanchéité et de tenue mécanique. La solution doit en outre rester simple et économique.

Selon l'invention, un circuit électrique de remorque de véhicule lourd du genre défini précédemment est caractérisé en ce que le prolongateur multiconducteur est muni, à au moins l'une de ses extrémités, d'une première partie de connecteur comportant un moyen de verrouillage mécanique avec une deuxième partie de connecteur prévue sur un ou plusieurs câbles à raccorder et comportant un moyen de verrouillage mécanique conjugué, et qu'un surmoulage est prévu autour de l'entrée pour câble de la partie de connecteur et du ou des câbles, pour l'étanchéité et la tenue mécanique.

De préférence, chaque extrémité du prolongateur multiconducteur est équipée d'une partie mâle (ou femelle) d'un connecteur.

Avantageusement le connecteur est cylindrique ou substantiellement cylindrique. D'autres formes géométriques sont possibles, dont notamment des formes de parallélépipède, des formes à section rectangulaire, carrée, trapézoïdale ou, de façon plus générale, à section polygonale, ou encore à section rond ou ovale. Le moyen de verrouillage comprend avantageusement une bague montée libre en rotation et pouvant être déplacée en translation sur une partie de connecteur. La bague comporte des organes, notamment des ergots en saillie radiale vers l'intérieur, pour coopérer avec des organes complémentaires, notamment des rainures hélicoïdales, prévus sur l'autre partie de connecteur.

Le surmoulage est de préférence du type "hot-melt" d'une résine thermofusible polyamide adhésive. Le surmoulage est prévu pour conserver une flexibilité au niveau de la liaison câble / connecteur.

Le surmoulage peut être réalisé à partir d'autres matériaux de type thermoplastique, élastomère, ou thermofusible qui sont injectés après montage du câble dans le connecteur.

Avantageusement plusieurs câbles sont regroupés dans une seule partie de connecteur pour réaliser des dérivations. Ce regroupement est réalisé au sein du connecteur par branchement, en particulier par sertissage, de fils de différents câbles dans une même cosse du connecteur.

Selon un autre aspect de l'invention qui peut être mis en oeuvre indépendamment ou en combinaison avec les caractéristiques précédentes, dans des cas simples, l'extrémité du prolongateur située du côté des prises ne comporte pas de connecteur et les surmoulages sont réalisés directement autour de groupes de fils issus du prolongateur, ces fils étant reliés directement aux prises.

L'invention concerne également un dispositif de raccordement entre la partie avant et la partie arrière d'un circuit électrique de remorque de véhicule lourd comprenant un prolongateur multiconducteur avec un moyen de jonction à chaque extrémité, et caractérisé en ce que le prolongateur multiconducteur est muni, à au moins l'une de ses extrémités, d'une première partie de connecteur comportant un moyen de verrouillage mécanique avec une deuxième partie de connecteur prévue sur un ou plusieurs câbles à raccorder et comportant un moyen de verrouillage mécanique conjugué, et qu'un surmoulage est prévu autour de l'entrée pour câble de la partie de connecteur et du ou des câbles, pour l'étanchéité et la tenue mécanique.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins:
Fig. 1 est une vue schématique latérale d'un véhicule lourd avec semi-remorque.
Fig.2 est une vue schématique de dessous du circuit électrique de signalisation de la remorque selon l'état de la technique.
Fig.3 est un schéma, semblable à Fig.2, du circuit électrique de signalisation de la remorque selon l'invention.
Fig.4 est une vue de dessus, à plus grande échelle, de la partie mâle d'un connecteur avec surmoulage selon l'invention.
Fig.5 est une vue de dessus, à plus grande échelle, de rainures prévues sur la partie mâle du connecteur pour un verrouillage mécanique.
Fig.6 est une vue de face d'une bague, prévue sur la partie femelle du connecteur, pour le verrouillage mécanique.
Fig. 7 est une vue de face de la partie femelle du connecteur.
Fig.8 montre, à plus petite échelle, les deux parties assemblées du connecteur et son maintien mécanique, et
Figs.9 à 14 montrent des variantes de réalisation.

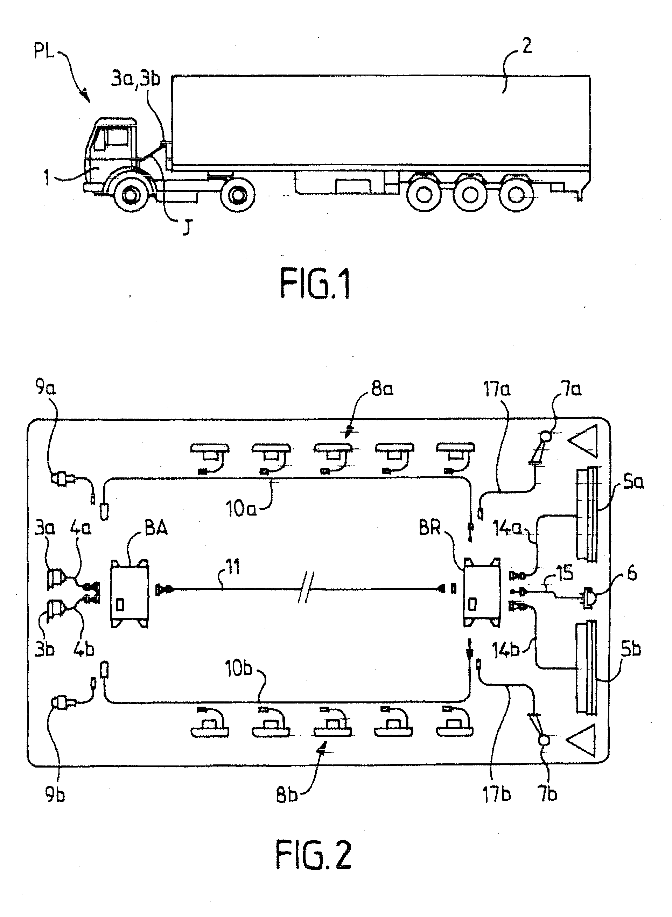

En se reportant à Fig. 1 des dessins, on peut voir un véhicule lourd PL comprenant un tracteur 1 et une semi remorque 2 qui sera appelée remorque par la suite.

Au-dessous du plancher de la remorque 2 est installé un circuit de signalisation représenté sur Fig.2 d'après l'état de la technique. Le circuit se trouve exposé à l'eau, à la poussière, et plus généralement aux agents atmosphériques, de sorte que les raccordements et dérivations doivent être efficacement protégés.

Les raccordements et dérivations doivent aussi répondre à des niveaux de tenue mécanique (traction axiale et flexion sur les connexions), thermique (utilisation entre - 40°C et +80°C) et vibratoire.

Le circuit de signalisation de Fig.2 comporte deux prises 3a, 3b à sept voies de type 24N et 24S. En variante, il pourrait n avoir une seule prise à quinze voies, ou plus de deux prises selon les souhaits du constructeur. Comme visible sur Fig. 1, les prises 3a, 3b sont fixées sur la partie frontale avant de la remorque, par exemple à un niveau supérieur au plancher. Le raccordement électrique au tracteur 1 est assuré par cordon extensible tel que J muni d'une fiche propre à coopérer avec la prise 3a, 3b correspondante. Un câble 4a, 4b part de chaque prise.

Le circuit de signalisation comprend deux feux arrière multifonction 5a, 5b, un éclaireur 6 de plaque d'immatriculation, des feux d'encombrement arrière 7a, 7b, des feux latéraux 8a, 8h et des feux d'encombrement avant 9a, 9h. Cette énumération n'est pas limitative, d'autres éléments pouvant être ajoutés.

Il convient donc d'acheminer vers chaque élément de signalisation les signaux de courant appropriés qui proviennent du véhicule tracteur 1 sur les différentes voies des prises 3a, 3b.

Selon l'état de la technique illustré sur Fig.2, pour réaliser les raccordements et dérivations on prévoit sous la remorque, vers l'avant un premier module de jonction BA et vers l'arrière un second module de jonction BR. Les modules BA et BR sont formés par des boîtiers généralement fixés par quatre vis. Chaque boîtier dispose de plusieurs entrées/ sorties sur lesquelles sont fixées des douilles équipées d'un presse-étoupe, par lesquelles passent des câbles à plusieurs conducteurs. Les liaisons électriques entre les différents faisceaux sont réalisées à l'intérieur de chaque boîtier BA, BR et le boîtier est fermé par un couvercle.

Les différents câbles de chaque faisceau sont munis à leurs extrémités de cosses qui sont enfichées sur des barrettes métalliques fixées sur le couvercle du boîtier et reliées entre elles suivant un schéma électrique prédéterminé. Le module de jonction doit être fermé par un couvercle muni d'un joint pour permettre l'étanchéité du boîtier. Ce module doit être fixé par la suite sur le véhicule à l'aide de plusieurs vis.

Les informations électriques destinées au module de jonction arrière BR sont transmises, depuis le module avant BA par un prolongateur multiconducteur 11 formé par un câble.

Les feux latéraux 8a, 8b sont alimentés respectivement par un câble d'alimentation 10a, 10b.

La partie avant du circuit est composée des prises 3a, 3b, de faisceaux de câbles entre les prises et le module avant BA, et de feux de position avant 9a, 9b qui sont généralement reliés au module avant BA.

La partie centrale est constituée des deux boîtiers de raccordement BA, BR reliés par le câble 11 (prolongateur)

La partie arrière est composée de faisceaux de câbles permettant l'alimentation des feux arrière 5a, 5b, des feux d'encombrement 7a, 7b, des feux latéraux 8a, 8b et d'autres éléments de signalisation éventuels.

Cet état de la technique présente plusieurs inconvénients, notamment en raison du volume des boîtiers BA, BR et de leur mode de fixation par quatre vis. Les raccordements électriques à l'intérieur des modules BA, BR nécessitent un temps de montage important sans garantie d'une fiabilité absolue de ce montage électrique. Le constructeur de remorque doit en effet connecter un par un tous les faisceaux d'alimentation des différents produits ce qui peut générer des erreurs de montage et qui, de toute façon, nécessite de confier la tâche à des personnes compétentes pour effectuer les connexions électriques.

En cas de détérioration partielle du prolongateur 11 ou d'un boîtier BA, BR, le remplacement des pièces abîmées demande également beaucoup de temps.

Toutefois, cette solution avec boîtiers BA, BR fixés sous la remorque permet d'assurer les nombreuses dérivations avec une étanchéité et une protection relativement satisfaisantes. Elle n'était pas remise en cause jusqu'à l'invention, qui a surmonté ce préjugé.

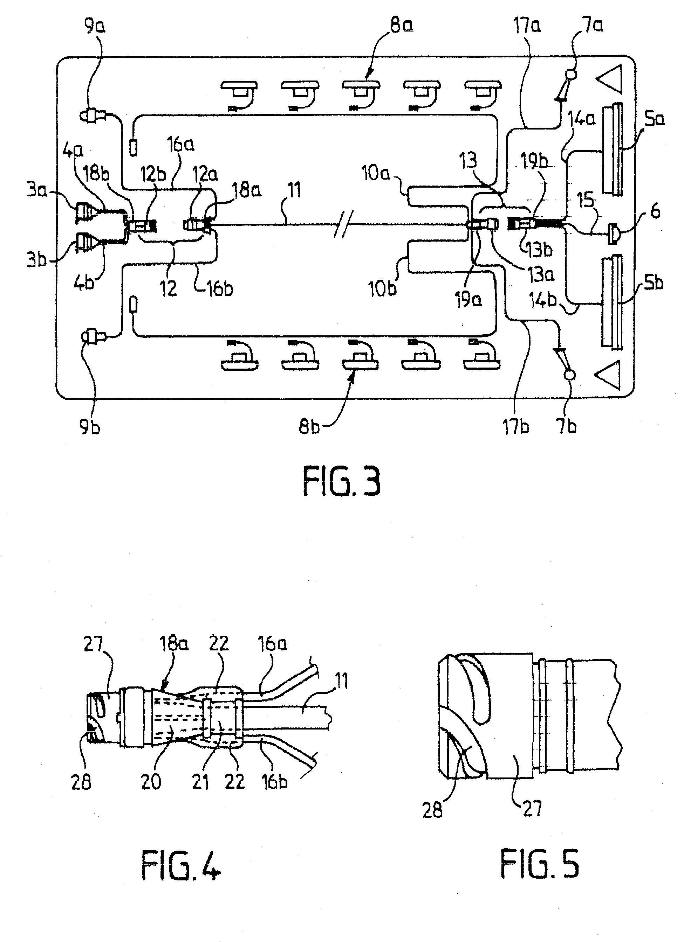

Selon l'invention illustrée sur Fig.3, au moins l'un des boîtiers BA, BR, et de préférence les deux boîtiers, sont supprimés. Le prolongateur 11 comporte à au moins une de ses extrémités et de préférence à chacune de ses deux extrémités une première partie 12a, 13a d'un connecteur 12, 13.

L'autre partie 12b du connecteur 12 est reliée aux câbles 4a, 4b provenant des prises 3a, 3b. L'autre partie 13b du connecteur 13 est reliée aux câbles 14a, 14b de liaison avec les feux arrière 5a, 5b et au câble 15 de liaison avec l'éclaireur de plaque 6.

Les parties 12a, 13a peuvent être les parties mâles ou femelles du connecteur, les parties 12b, 13b étant formées par la partie conjuguée femelle ou mâle.

Les parties 12a, 13a de connecteur peuvent être reliées, non seulement au prolongateur 11, mais aussi à d'autres câbles. Par exemple la partie 12a peut être reliée à des câbles 16a, 16b pour l'alimentation des feux d'encombrement avant 9a, 9b. La partie 13a du connecteur arrière 13 peut être reliée, en plus du câble 11, à des câbles plats 10a, 10b pour l'alimentation des feux latéraux 8a, 8b, ainsi qu'à des câbles 17a, 17b pour l'alimentation des feux d'encombrement arrière 7a, 7b.

Le regroupement de plusieurs câbles dans une seule partie de connecteur (mâle ou femelle) permet de réaliser des dérivations, c'est-à-dire un branchement électrique ayant une voie d'entrée et au moins deux voies de sortie.

Ce regroupement est réalisé au sein de la partie de connecteur par branchement, notamment par sertissage, de plusieurs fils d'un ou plusieurs câbles sur une même cosse ou broche.

Pour assurer l'étanchéité du ou des câbles par rapport au connecteur, et pour améliorer la tenue mécanique, un surmoulage 18a, 19a est prévu au niveau de l'extrémité de la partie de connecteur par laquelle le ou les câbles sont insérés dans le connecteur. Un surmoulage semblable 18b, 19b est prévu au niveau de l'entrée des câbles dans l'autre partie de connecteur 13a, 13b.

Le surmoulage 18a, 19a est de type « hot-melt » d'une résine thermofusible polyamide adhésive. Ce surmoulage peut être réalisé à partir d'autres matériaux de type thermoplastique ou élastomère, ou à partir d'autres thermofusibles qui sont injectés après montage du ou des câbles dans le connecteur.

Le matériau utilisé est choisi pour permettre de conserver, au niveau de la liaison câble / connecteur, une flexibilité suffisante.

Comme visible sur Fig.4, le surmoulage 18a comporte une partie tronconique 20 dont la grande base est solidaire de l'arrière du connecteur et dont la petite base est prolongée par une partie cylindrique 21 qui entoure le prolongateur 11. Le surmoulage comporte des ailettes radiales 22 en saillie sur la partie cylindrique 21 et qui se raccordent à la partie tronconique 21. Les ailettes 22 sont formées par une partie du surmoulage dans laquelle sont noyés d' autres câbles tels que 16a, 16b reliés au même connecteur.

Chaque partie de connecteur est formée d'une enveloppe cylindrique 23 (Fig.7) en matière plastique, à section circulaire. Un ergot 24 ou des formes spéciales sont réalisées dans cette enveloppe 23 afin de créer un détrompage qui n'autorise un assemblage complet des deux parties du connecteur que dans une position angulaire déterminée.

Le connecteur comprend, à l'intérieur de l'enveloppe 23, un cylindre à section droite circulaire 25, en matière plastique, dans lequel un certain nombre de cavités sont réalisées pour permettre le passage d'organes de raccordement électrique 26 constitués par des cosses mâles, ou fiches, pour une partie mâle de connecteur et par des cosses femelles, ou douilles, pour une partie femelle. Le nombre de cavités prévues dans le cylindre 25 définit le nombre de voies ou de fils qui peuvent être admis dans le connecteur. Chaque cavité et donc chaque cosse a une position précise dans le cylindre 25.

Pour réaliser une liaison électrique entre deux câbles suivant un schéma électrique déterminé, il suffit de raccorder les fils des câbles, par exemple par sertissage, avec les cosses des deux parties du connecteur en respectant la numérotation affectée à chaque cosse.

La liaison électrique est obtenue en réunissant la partie mâle et la partie femelle du connecteur par un mouvement de translation suivant la direction axiale du cylindre 25. L'assemblage ne pouvant se faire que dans une orientation angulaire déterminée, on est assuré d'une liaison correcte entre les différents câbles.

Chaque connecteur est en outre prévu pour permettre de réaliser un verrouillage mécanique entre ses deux parties telles que 12a, 12b lorsque la liaison électrique a été réalisée.

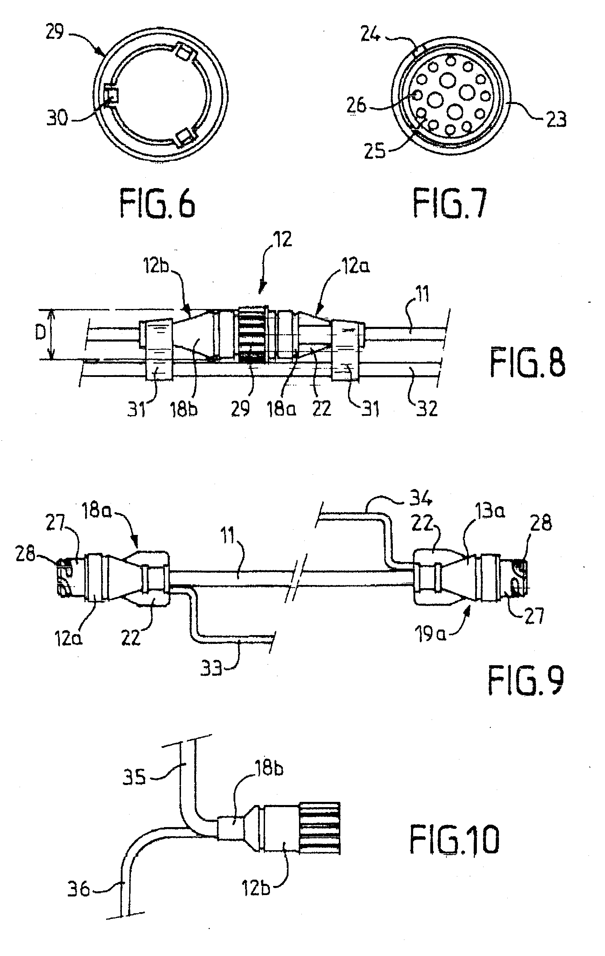

Pour cela, chaque partie mâle d'un connecteur comporte, comme visible sur Fig.5, une paroi extérieure cylindrique circulaire 27 dans laquelle sont prévues des rainures 28 hélicoïdales débouchant à l'extrémité axiale de la paroi 27. Ces rainures 28 sont par exemple au nombre de trois décalées angulairement de 120°. Une bague cylindrique 29 (Figs. 6 et 8) est montée libre en rotation avec possibilité de coulissement limité autour de la partie femelle. La bague 29 est prévue avec des ergots 30 orientés radialement vers l'intérieur pour coopérer avec les rainures 28. Lorsque les deux parties mâle et femelle du connecteur ont été pré-assemblées par coulissement axial, la bague 29 est orientée de manière que ses ergots 30 viennent en face de l'entrée des rainures 28. En poussant et en faisant tourner la bague 29 on provoque la coopération des ergots 30 et des rainures hélicoïdales 28 jusqu'à verrouillage des deux pièces en fin de rotation. Les rainures 28 se terminent par des formes particulières, notamment des encoches, qui emprisonnent les ergots 30 et empêchent la bague de tourner en sens inverse et ainsi de déverrouiller le système.

Le verrouillage réalisé avec la bague 29 est de préférence assuré par un quart de tour de cette bague. La bague 29, outre sa fonction de verrouillage, permet de maintenir une pression axiale entre les deux parties du connecteur. Cette pression contribue à l'établissement d'une bonne étanchéité entre les deux parties du connecteur, complétée par la présence d'un joint pour empêcher l'introduction de liquide et de poussière.

Le maintien des connecteurs tels que 12, comme illustré sur Fig.8, de même que le maintien du prolongateur 11 sont assurés par de simples colliers auto-serrants 31 autour d'un élément 32 du châssis de la remorque, par exemple un profilé longitudinal.

Le diamètre maximal D du connecteur est choisi au plus égal à 40 mm de manière à permettre de loger aisément les connecteurs dans l'espace disponible sous le plancher de la remorque.

Fig. 9 montre une variante de réalisation selon laquelle un câble plat 33 multiconducteur est relié à la partie 12a du connecteur en plus du prolongateur 11.

Fig. 10 montre une variante selon laquelle la partie 12b du connecteur est reliée à deux câbles cylindriques multiconducteurs 35, 36. Un surmoulage 18b est prévu à l'entrée des câbles dans la partie 12b.

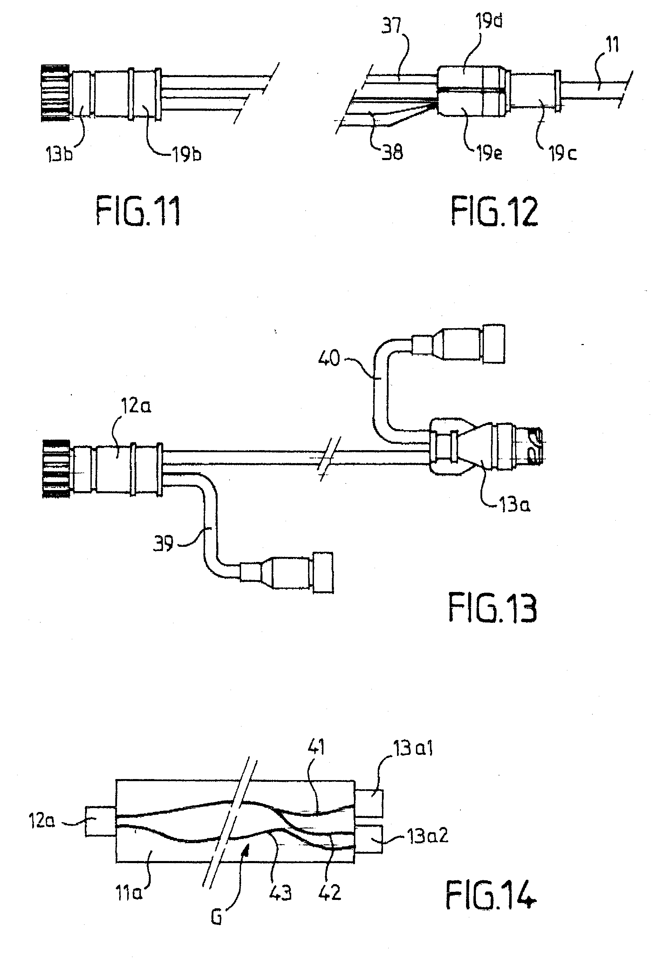

Fig. 11 montre une variante selon laquelle la partie femelle 13b est reliée à deux câbles multiconducteurs cylindriques entourés par un surmoulage 19b à leur entrée dans la partie 13b.

Fig. 12 montre une variante de réalisation simplifiée lorsque le nombre de fils du prolongateur 11 pour raccordement aux prises telles que 3a, 3b est réduit. Dans ce cas, on peut dégager l'extrémité du câble 11 de sa gaine extérieure sur une longueur réduite de manière à faire apparaître les divers conducteurs entourés de leur gaine isolante individuelle. Ces conducteurs sont divisés en autant de groupes qu'il y a de prises telles que 3a, 3b. Dans l'exemple considéré deux groupes de conducteurs 37, 38 sont formés correspondant respectivement aux deux prises 3a, 3b. Les extrémités de chaque conducteur individuel sont munies de cosses permettant leur raccordement aux différentes bornes des prises. Un surmoulage 19c est réalisé à l'extrémité de la gaine du prolongateur 11 avec deux embranchements de surmoulage 19d, 19e entourant séparément de manière étanche le début des groupes 37, 38.

Fig. 13 montre une variante de réalisation selon laquelle des câbles multiconducteurs 39, 40 sont branchés en dérivation sur les parties 12a, 13a de connecteur. Chaque câble 39, 40 comporte à son extrémité libre un élément de raccordement permettant de doubler les fonctions de signalisation.

Fig. 14 montre une variante de réalisation selon laquelle le prolongateur multiconducteur 11a est formé par un réseau de câbles 41, 42, 43 reliés entre eux suivant un schéma électrique déterminé. La zone G des câbles est ensuite surmoulée dans une matière thermoplastiqe ou thermofusible (par procédé « hot-melt ») ou élastomère, afin de conserver de préférence une flexibilité plus ou moins importante. Le circuit plat flexible est muni à une extrémité du connecteur d'entrée 12a et à son autre extrémité de deux, ou davantage, connecteurs de sortie 13a1 et 13a2. il est également possible de prévoir un surmoulage rigide.

Dans la variante de Fig. 14 les câbles peuvent être remplacés par un circuit acier sur lequel les connecteurs sont reportés. Un surmoulage thermoplastique réalise l'étanchéité.

Le circuit acier pourrait être idéalement remplacé par un circuit imprimé. Pour gagner en flexibilité, ce circuit imprimé peut être remplacé par un circuit imprimé souple mono ou double couche. Une telle version n'est cependant valable que pour des cas où l'intensité à transmettre est de faible valeur.

Le cas échéant, selon les souhaits des constructeurs, une boîte de dérivation, fixée sous le châssis, pourrait être prévue entre les parties de connecteur 12a, 13a qui seraient raccordées à cette boite par deux tronçons séparés du prolongateur 11.

Le connecteur 12, 13 est choisi de forme cylindrique à section droite circulaire ce qui permet de réaliser le verrouillage mécanique par rotation d'une bague. Cette solution compacte permet la mise en place d'un tel raccordement sur l'ensemble de la gamme de remorques et semi-remorques existantes à ce jour.

Les connecteurs 12, 13 permettent de raccorder deux câbles ou faisceaux de câbles rapidement, avec possibilité de changement du prolongateur 11,11a ce qui facilite la maintenance.

Le connecteur est généralement pré-câblé ce qui évite à l'utilisateur ( le constructeur de remorques) d'avoir à réaliser les branchements électriques, d'où un gain considérable de temps et une réduction sensible des erreurs possibles.

Les formes spéciales de détrompage permettent de réaliser un raccordement sans erreur possible. Ceci est particulièrement intéressant lorsque le raccordement doit être réalisé en aveugle du fait de la configuration de certains châssis de remorques. Le surmoulage rend complètement étanche le connecteur notamment à l'égard de jets haute pression utilisés pour le lavage des véhicules.

Le verrouillage mécanique permet d'améliorer la tenue aux sollicitations telles que traction, flexion et vibrations.

Le volume et la masse réduits du connecteur permettent d'éviter la fixation par des vis de ce connecteur sur le châssis de la remorque. De simples colliers auto-serrants 31 suffisent.

La fiabilité des connexions électriques est améliorée. Chaque connexion électrique individuelle est protégée des autres par un isolement plastique au sein du connecteur de sorte que les risques de court-circuit sont considérablement réduits.

## Revendications

1. Circuit électrique de remorque de véhicule lourd comportant, à l'avant de la remorque, au moins une prise (3a, 3b) fixée à la remorque (2) pour l'établissement d'une liaison électrique avec le véhicule tracteur, un premier moyen de jonction entre au moins un câble (4a, 4b) venant de la prise et un prolongateur multiconducteur (11, 11a) s'étendant vers l'arrière de la remorque, et un deuxième moyen de jonction prévu à l'arrière de la remorque entre le prolongateur multiconducteur et plusieurs dérivations vers différents feux ou organes électriques, le prolongateur multiconducteur (11, 11a) étant muni, à au moins l'une de ses extrémités, d'une première partie de connecteur (12a, 13a) destinée à coopérer avec une deuxième partie de connecteur (12b, 13b) prévue sur un ou plusieurs câbles à raccorder, un surmoulage (18a, 19a) étant prévu autour de l'entrée pour câble de la partie de connecteur et du ou des câbles, pour l'étanchéité et la tenue mécanique, **caractérisé en ce que** la première partie de connecteur (12a, 13a) comporte un moyen de verrouillage mécanique (28) avec la deuxième partie de connecteur (12b, 13b), qui comporte un moyen de verrouillage mécanique conjugué (29).

2. Circuit électrique selon la revendication 1, **caractérisé en ce que** chaque extrémité du prolongateur multiconducteur (11, 11a) est équipée d'une partie mâle (ou femelle) (12a, 13a) de connecteur.

3. Circuit électrique selon la revendication 1 ou 2, **caractérisé en ce que** chaque connecteur (12, 13) est cylindrique ou de section carrée, rectangulaire ou trapézoïdale, et le moyen de verrouillage comprend de préférence une bague (29) montée libre en rotation et pouvant être déplacée en translation sur une partie de connecteur.

4. Circuit électrique selon la revendication 3, **caractérisé en ce que** la bague (29) comporte des organes, notamment des ergots (30) en saillie radiale vers l'intérieur, pour coopérer avec des organes complémentaires, notamment des rainures hélicoïdales (28), prévus sur l'autre partie de connecteur.

5. Circuit électrique selon l'une des revendications précédentes, **caractérisé en ce que** le surmoulage (18a, 19a, 18b, 19b) est du type "hot-melt" d'une résine thermofusible polyamide adhésive.

6. Circuit électrique selon l'une des revendications 1 à 4 **caractérisé en ce que** le surmoulage (18a, 19a, 18b, 19b) est réalisé à partir de matériaux de type thermoplastique, élastomère, ou thermofusible qui sont injectés après montage du câble dans le connecteur.

7. Circuit électrique selon l'une des revendications précédentes, **caractérisé en ce que** le surmoulage (18a, 19a, 18b, 19b) est prévu pour conserver une flexibilité au niveau de la liaison câble / connecteur, ou en que qu'il est rigide.

8. Circuit électrique selon l'une des revendications précédentes, **caractérisé en ce que** le diamètre maximal (D) du connecteur (12, 13) est au plus égal à 40mm.

9. Circuit électrique selon l'une des revendications précédentes, **caractérisé en ce que** plusieurs câbles (11, 16a, 16b, 11, 10a, 10b, 17a, 17b; 14a, 14b, 15) sont regroupés dans une seule partie de connecteur pour réaliser des dérivations.

10. Circuit électrique selon la revendication 9, **caractérisé en ce que** le regroupement est réalisé au sein du connecteur par branchement, en particulier par sertissage, de fils de différents câbles dans un même cosse du connecteur.

11. Dispositif de raccordement entre la partie avant et la partie arrière d'un circuit électrique de remorque de véhicule lourd comprenant un prolongateur multiconducteur (11, 11a) avec un moyen de jonction à chaque extrémité, le prolongateur (11) étant muni, à au moins l'une de ses extrémités, d'une première partie de connecteur (12a, 13a) destinée à coopérer avec une deuxième partie de connecteur (12b, 13b) prévue sur un ou plusieurs câbles à raccorder, un surmoulage (18a, 19a) étant prévu autour de l'entrée pour câble de la partie de connecteur et du ou des câbles, pour l'étanchéité et la tenue mécanique, **caractérisé en ce que** la première partie de connecteur (12a, 13a) comporte un moyen de verroullage mécanique (28) avec la deuxième partie de connecteur (12b, 13b) qui comporte un moyen de verrouillage mécanique conjugué (29).
